# EUROPÄISCHE PATENTANMELDUNG

(11) **EP 0 972 814 A1**
(43) Veröffentlichungstag der Anmeldung: **19.01.2000**
(21) Anmeldenummer: 99113449.5
(22) Anmeldetag: 12.07.1999
(51) Int. Cl.: C09J 167/02

(54) **Tiefschmelzende Copolyester- bzw. Copolyetheresterschmelzklebemassen**

(30) Priorität: 13.07.1998 DE 19831366
(71) Anmelder: EMS-Chemie AG, 7013 Domat/Ems (CH)
(72) Erfinder: Kinkelin, Eberhard, 7000 Chur (CH); Pössnecker, Gerhard, 7014 Trin (CH); Spindler, Jürgen, 7013 Domat/Ems (CH)
(74) Vertreter: Becker, Eberhard, Dr.

(57) **Zusammenfassung**

Die Erfindung betrifft neue schnellkristallisierende Schmelzklebemassen mit einem Schmelzpunkt zwischen 65°C bis 95°C.
Sie bestehen aus einem statistisch aufgebauten Copolyester bzw. Copolyetherester auf Basis von Terephthalsäure, Adipinsäure und einem Gemisch von aliphatischen Diolen, wobei der molare Anteil an Terephthalsäure, bezogen auf die Gesamtsäuremenge, zwischen 55 und 85 Mol-% liegt und der molare Anteil an Adipinsäure zwischen 15 und 40 Mol-% beträgt, dass als Diolkomponente eine Kombination von Butandiol und Hexandiol vorliegt, wobei der molare Anteil an Butandiol zwischen 40 und 55 Mol-% und der molare Anteil an Hexandiol zwischen 40 und 60 Mol-% beträgt. Zur Erhöhung der Flexibilität kann eine Dimersäure mit Molmasse zwischen 400 und 800 g/Mol bis zu 15 Mol-% oder ein höhermolekulares Polyethylenglykol mit einer Molmasse von 600-4000 g/Mol bis zu 10 Mol-% eingesetzt werden. Der Schmelzpunkt der Copolyester- bzw. Copolyetheresterschmelzmassen liegt zwischen 65°C und 95°C.
Die erfindungsgemässen Copolyester- bzw. Copolyetheresterschmelzklebemassen können im Hotmelt-Verfahren und für die bekannten anderen pulverförmigen Beschichtungsverfahren eingesetzt werden.

## Beschreibung

Die vorliegende Erfindung betrifft thermoplastische Copolyester bzw. Copolyetherester für Schmelzklebeanwendungen.

Die Erfindung befasst sich speziell mit linearen, tiefschmelzenden, schnellkristallisierenden und flexiblen Copolyestern bzw. Copolyetherestern auf der Basis von Terephthalsäure, Adipinsäure, 1,4-Butandiol, 1,6-Hexandiol und gegebenenfalls einer längerkettigen aliphatischen Komponente, wie Polyethylenglykol mit einem mittleren Molekulargewicht von 600 - 4000 g/Mol oder einer Dicarbonsäure mit einem mittleren Molekulargewicht von 400 - 800 g/Mol. Dabei handelt es sich bei Copolyestern, welche Komponenten wie Polyethylenglykol enthalten, nicht mehr um reine Copolyester, sondern um Copolyetherester. Die Schmelzpunkte der beschriebenen Polyester bzw. Copolyetherester liegen in einem Bereich von 60 - 100°C.

Diese Polyester bzw. Polyetherester dienen als Schmelzklebemassen für technische und textile Anwendungen, bei denen temperaturempfindliche Substrate verklebt werden müssen.

Der Einsatz von unterschiedlichen Copolyestern und Copolyetherestern ist bereits vielfach in der Literatur beschrieben.

In DE 196 32 473 und DE 196 32 474 werden schnellkristallisierende und hochflexible Copolyetherester-Schmelzkleber auf der Basis von Terephthalsäure, 1,4-Butandiol, Diethylenglykol, Triethylenglykol und Polyethylenglykol beschrieben. Diese Copolyetherester kristallisieren sehr schnell bei einem Schmelzpunkt von über 115°C. Die niederschmelzenden Polyester mit Schmelzpunkt von 90°C sind aufgrund der langsameren Kristallisationsgeschwindigkeit und der damit verbundenen Klebrigkeit für einen Einsatz als Film, Web oder Pulver nicht zu gebrauchen.

Auch in EP 698 648 sind niederschmelzende Copolyester mit Schmelzpunkt 60° - 130°C für den Schmelzklebebereich beschrieben. Diese Polyester sind auf der Basis von Terephthalsäure, Isophthalsäure, 1,4-Butandiol, Diethylenglykol und Triethylenglykol aufgebaut. Allein aus dieser Monomerenzusammenstellung ergibt sich die Tatsache einer viel zu geringen Kristallisationsgeschwindigkeit, um den gestellten Ansprüchen gerecht zu werden.

In JP 59 011 383 werden Polyester für Hotmelt-PVC-Verklebungen mit Schmelzpunkten 80- 160°C beschrieben, bestehend aus Terephthalsäure, Adipinsäure, Butandiol und Diethylenglykol. Auch aus dieser Kombination resultiert nur eine ungenügende Kristallisationsgeschwindigkeit.

In CH 618199 werden zahlreiche Copolyester und ihre Zusammensetzung mit Schmelzpunkten von 50 - 200°C beschrieben. Als Säurekomponente wird gemäß CH 618199 immer eine Kombination aus Terephthalsäure und Isophthalsäure verwendet, um eine Herabsetzung der Schmelzpunkte zu erreichen. Lediglich auf Seite 7 in Tabelle 3 wird ein Copolyester der Terephthalsäure mit Butandiol - 1,4 - Hexandiol - 1,6 - Gemischen mit molaren Anteilen an Terephthalsäure von 70 Mol-%, Adipinsäure von 30 Mol-%, Butandiol von 50 Mol-% und Hexandiol von 50 Mol-% beschrieben. Diese Copolyester sollen im wesentlichen als Pulverbeschichtungsmittel verwendet werden. Bei dieser Beschichtungsart ist in der Regel keine hohe Kristallisationsgeschwindigkeit erforderlich. Daher gibt die CH 618199 in fast allen Beispielen die Säurekombination Terephthalsäure/Isophthalsäure an, diese Säurekombinationen sind für die Praxis relevant. Es hat sich aber gezeigt, dass das Kristallisationsverhalten derartiger Copolyester als sehr langsam anzusehen ist.

In US 4,966,959 werden Copolyester aus Terephthalsäure, einer weiteren aliphatischen Disäure, Butandiol und einem weiteren aliphatischen Diol beansprucht. Gemäss den Beispielen bzw. in Unteranspruch 4 wird als weiteres Co-Diol immer Diethylenglykol eingesetzt. Die Kristallisationsgeschwindigkeit von derartigen Polymeren ist jedoch sehr niedrig.

US 4,328,278 beschreibt Copolyesterschmelzklebemassen mit Terephthalsäure als Säurekomponente bzw. einer weiteren Co-Säure aus der Gruppe Isophthalsäure, Adipinsäure, Glutarsäure, Bernsteinsäure. Die Diolcomponenten bestehen aus Hexandiol und Diethylenglykol.

Schliesslich werden in US 4,551,521 niederschmelzende Polyesterkleber mit Schmelzpunkten von 60° - 130° C beschrieben. Diese Polyester sind grösstenteils aus Adipinsäure und Cyclohexandimethanol zusammengesetzt und erfüllen gut das Kriterium einer hohen Kristallisationsgeschwindigkeit. Die Polyester sind aber im Gegensatz zu den erfindungsgemäßen Polyestern bzw. Copolyetherestern voll aliphatisch, d.h. es wird keinerlei Terephthalsäure eingesetzt. Voll aliphatische Polyester sind hervorragend biologisch abbaubar, sind damit aber natürlicherweise auch gegen Witterungseinflüsse und Feuchtigkeit sehr anfällig. Diese Eigenschaft ist aber für einen Schmelzkleber, der zwei Substrate miteinander verbinden soll und eine gewisse Wärmestandfestigkeit haben muss, kontraproduktiv. Die erhöhte biologische Abbaubarkeit ist erfahrungsgemäss bis zu einem Anteil an aromatischen Komponenten von 30% gegeben.

Alle im Stand der Technik beschrieben Copolyester oder Copolyetherester weisen also wesentliche substantielle Nachteile auf und führen nicht zu thermoplastischen Copolyester- bzw. Copolyetheresterschmelzklebemassen mit tiefem Schmelzpunkt, hoher Kristallisationsgeschwindigkeit, hoher Flexibilität und chemischer Stabilität, die als Schmelzkleber in technischen Anwendungen für schwierige Substrate eingesetzt werden können.

Es besteht daher die Notwendigkeit der Entwicklung von schnellkristallisierenden und hochflexiblen Produkten für Hotmelt-Klebeanwendungen mit Schmelztemperaturen von maximal 100°C.

Der Vorteil eines tiefen Schmelzpunktes liegt in der Möglichkeit, niedere Applikationstemperaturen anwenden zu können. Dies ist vor allem wichtig im Bereich der technischen Verklebungen, wenn Substrate, wie z.B. PVC oder Polyolefine, eingesetzt werden, die Schmelztemperaturen unterhalb von 120°C haben. Aber auch im Bereich von Einlagenverklebungen können diese Polyester eingesetzt werden, wenn die zu verklebenden Substrate extrem temperaturempfindlich sind und bei zu hohen Anwendungstemperaturen entweder zu Schrumpf neigen oder sogar zerstört werden.

Der Einsatz eines Copolyesters bzw. Copolyetheresters mit hoher Kristallisationsgeschwindigkeit bietet sich aus verschiedenen Gründen an. Die Bildung von kristallinen Bereichen ist Voraussetzung für die mechanische Festigkeit eines Polymeren oberhalb der Glastemperatur. Je schneller sich also diese kristallinen Domänen ausbilden können, desto eher ist die Verklebungsstelle mechanisch belastbar. Des weiteren ist die Oberflächenklebrigkeit eines polymeren Schmelzklebers direkt von dessen Kristallisation abhängig. Je geringer die Tendenz zur Kristallisation ist, desto länger bleiben z.B. Folien oder Klebenetze klebrig. Dies bringt beispielsweise beim Aufrollen dieser Folien Schwierigkeiten mit sich, da die einzelnen Lagen leicht miteinander verkleben können und dadurch die ganze Rolle unbrauchbar wird. Dieser Effekt lässt sich zwar durch Auftragen einer sog. Trägerfolie, die den aufgetragenen Kleber von der nächsten Schicht trennt, umgehen. Vor Verpressen mit dem weiteren Substrat muss diese Folie allerdings entfernt werden, was zu Mehraufwand und vor altem zu Abfall führt. Eine andere Möglichkeit sind zeit- und energieaufwendige Temperungsprozeduren, die natürlich ebenso für den ganzen Produktionsprozess von erheblichem Nachteil sind. Bei Einsatz eines schnellkristallisierenden Polymeren entfallen all diese Schritte.

Der Vorteil von hochflexiblen Produkten liegt in vielerlei Hinsicht auf der Hand. Einerseits können bei Verklebungen im technischen Bereich, abhängig vom Substrat, nur mit flexiblen Klebmassen ausreichende Haftungswerte und Beständigkeiten erreicht werden.

Zum andern können beschichtete und verklebte Teile nachträglich noch Spannungen und Deformationen ausgesetzt werden, bei denen herkömmliche Kleber ihre Haftungseigenschaften verlieren und zu Substratablösungen führen. In diesen Fällen ist ein hochflexibler Klebstoff die einzige Möglichkeit, eine dauerhafte Verbindung von Werkstoffen herzustellen.

Aufgabe der Erfindung ist daher, durch geeignete Kombination von Rohstoffen die vier geforderten Eigenschaften "Tiefer Schmelzpunkt", "Hohe Kristallisationsgeschwindigkeit", "Hohe Flexibilität" und "Hohe chemische Stabilität" in Einklang zu bringen.

Diese Aufgabe wird durch die tiefschmelzenden, schnellkristallisierenden und hochflexiblen Copolyester- bzw. Copolyetheresterschmelzklebemassen gemäss Anspruch **1** gelöst.

In den Unteransprüchen sind spezielle Ausführungsformen der Erfindung enthalten.

Die Lösung der vorgenannter Aufgabe liegt insbesondere in Schmelzklebemassen aus statistisch zusammengesetztem Copolyestern bzw. Copolyetherestern mit einer Kombination von Butandiol (BD) und Hexandiol (HD) und wahlweise anderen langkettigen linearen aliphatischen Diolen und Terephthalsäure (TPS) und Adipinsäure (ADI) und wahlweise anderen langkettigen aliphatischen Dicarbonsäuren als Säurekomponenten. Die Viskosität sollte bei diesen tiefschmelzenden Produkten nicht über 800 Pa*s, vorzugsweise nicht über 400 Pa*s bei 160°C und 2,16 kg Belastung nach DIN/ISO 1133 liegen, um eine Verarbeitung als Hotmelt bei tiefen Temperaturen zu ermöglichen.

Bei alleiniger Verwendung von Terephthalsäure als Säurekomponente liegen im allgemeinen die Schmelzpunkte weit über dem gewünschten Bereich. Eine Herabsetzung des Schmelzpunktes ist durch einen Teilersatz der Terephthalsäure durch eine andere Säure, wie z.B. Isophthalsäure, leicht möglich. Eine solche Kombination verschlechtert aber die Kristallinität bzw. die Kristallisationsgeschwindigkeit in erheblichem Masse.

Ein weiterer begehbarer Weg ist der Einsatz von anderen Diolkomponenten als 1,4-Butandiol. So lässt sich durch eine 1:1-Mischung von Butandiol und Hexandiol und Terephthalsäure als alleiniger Säurekomponente der Schmelzpunkt auf ca. 125°C einstellen, verglichen mit einem Schmelzpunkt von 225°C für die Kombination Terephthalsäure/Butandiol.

Überraschenderweise lassen sich in der vorliegenden Erfindung durch die Kombination der vier Monomere Terephthalsäure, Adipinsäure, Butandiol und Hexandiol in einem relativ engen Bereich Polyester herstellen, die Schmelzpunkte deutlich unter 100°C haben, flexibel und sehr schnell kristallisierend sind.

Obwohl schon durch den Einsatz dieser Monomeren eine hohe Flexibilität des Polymeren erreicht wird, ist die Flexibilität noch deutlich zu erhöhen und zwar nur durch den Einsatz eines längerkettigen aliphatischen Diols oder einer längerkettigen aliphatischen Dicarbonsäure. Diese langkettigen aliphatischen Monomere sind allerdings in der Zugabemenge beschränkt, da ein Einsatz von mehr als 20 Mol-%, bezogen auf die Gesamtsäuremenge, die Glastemperatur zu stark herabsetzt und eine Verarbeitung unmöglich macht.

Obwohl auf dem Gebiet der Klebstoffe eine Vielzahl von Veröffentlichungen existiert, ist die Monomerkombination der vorliegenden Erfindung noch nie beschrieben und in seiner Kombination und den erzielten Eigenschaften einzigartig.

Der molare Anteil an Terephthalsäure beträgt von 55 und 85 Mol-%, bevorzugt von 60 bis 80 Mol-%, und der Anteil an Adipinsäure von 15 bis 40 Mol-%, bevorzugt von 20 bis 40 Mol-%, jeweils bezogen auf die Gesamtsäuremenge. Als längerkettige aliphatische Cosäurekomponente werden gegebenenfalls 0 bis 15 Mol-%, bevorzugt 0 bis 12 Mol-%, einer längerkettigen aliphatischen Dicarbonsäure mit einem Molekulargewicht von etwa 400 bis etwa 800 g/Mol eingesetzt. Besonders bevorzugt als Cosäurekomponenten sind sogenannte Dimerfettsäuren oder Dimersäuren, wie z.B. eine C₃₆-Dicarbonsäure mit einem mittlerem Molekulargewicht von 565 g/Mol mit Handelsnamen Empol® 1062.

Der molare Anteil an Butandiol beträgt von 40 bis 55 Mol-%, bevorzugt von 40 bis 45 Mol-%, der Anteil an Hexandiol von 40 bis 60 Mol-%, bevorzugt von 45 bis 60 Mol-%, jeweils bezogen auf die Gesamtdiolmenge. Gegebenenfalls kann das Gemisch eine längerkettige aliphatische Diolkomponente in einer Menge von 0 bis 10 Mol-%, bevorzugt 0 bis 8 Mol-% eingesetzt werden. Als längerkettige aliphatische Diole kommen dabei bevorzugt höhermolekulare Polyetherdiole, insbesondere Polyethylenglykole, mit einem mittleren Molekulargewicht von 500 bis 4000 g/Mol, zum Einsatz.

Die Schmelzpunkte der erfindungsgemässen Copolyester- bzw. Copolyetheresterschmelzklebemassen liegen zwischen 60 und 100°C, vorzugsweise zwischen 65 und 95°C. Die Schmelzviskosität, gemessen bei 160°C und 2,16kg Belastung nach DIN/ISO 1133 liegt vorzugsweise nicht über 400 Pa*s.

Die erfindungsgemässen Copolyester- bzw. Copolyetheresterschmelzklebemassen können ferner übliche Additive, wie Hitzestabilisatoren, Farbstabilisatoren, usw. enthalten.

Die Vorteile der erfindungsgemässen Copolyester- bzw. Copolyetheresterschmelzklebemassen beruhen auf der besonderen und nirgends beschriebenen Wirkung der Kombination von Terephthalsäure, Adipinsäure, Butandiol, Hexandiol und gegebenenfalls höhermolekularen Komponenten, wie Polyethylenglykol und Dimersäure, die einerseits den Schmelzpunkt in den gewünschten Bereich verschiebt, andererseits auch für die hohe Kristallisationsgeschwindigkeit, die hohe Flexibilität und die chemische Stabilität verantwortlich ist.

Die erfindungsgemässen Copolyester- bzw. Copolyetheresterschmelzklebemassen kommen aufgrund ihrer Flexibilität hauptsächlich im Hotmeltverfahren zur Anwendung, können aber auch in den bekannten pulverförmigen Beschichtungsverfahren, wie Pulverpunkt-, Pastenpunkt- und Streubeschichtung eingesetzt werden.

Die erfindungsgemässen Copolyester- bzw. Copolyetheresterschmelzklebemassen können mit reduzierter Weichmachermenge auch zur Herstellung von Klebern und Pasten verwendet werden.

In folgenden Beispielen sollen die für die erfindungsgemässen Schmelzklebemassen verwendbaren Copolyetherester mit anderen Produkten verglichen werden, wobei die Beispiele 9 und 10 als Vergleichsbeispiele dienen, die nicht von der vorliegenden Erfindung abgedeckt werden.

Die thermischen Analysen, wie Bestimmung des Schmelzpunkts und der Glastemperatur wurden mit einem DSC(differential scanning calorimetry)-Gerät der Fa. TA Instruments durchgeführt. Als Schmelzpunkt wird das Maximum des Schmelzpeaks bei der ersten Aufheizung angenommen, als Glastemperatur T_{g} die Mitte der beiden Basislinien bei der zweiten Aufheizung. Als Erstarrungspunkt wird das Maximum des Peaks bei der kontrollierten Abkühlung gemessen, als Kaltkristallisationspunkt die Mitte des Peaks bei der zweiten Aufheizung. Die erste und zweite Aufheizung wird mit einer Geschwindigkeit von 20 K/min gefahren. Die Abkühlkurve wird mit einer Geschwindigkeit von 5 K/min gefahren. Vor der zweiten Aufheizung wird die Probe ferner schnell mit flüssigem Stickstoff abgeschreckt.

Die Schmelzviskosität wurde nach dem Auslaufverfahren bei 160°C und einer Belastung von 2,16kg nach DIN/ISO 1133 bestimmt.

In den Beispielen wurden als höhermolekulares Etherdiol ein Polyetherglykol mit mittlerem Molekulargewicht von 600 g/Mol (Pluriol® E 600, Handelsprodukt der BASF AG) und als langkettige aliphatische Dicarbonsäure eine C₃₆-Dicarbonsäure mit einem mittleren Molekulargewicht von 565 g/Mol (Empol® 1062, Handelsprodukt der Hoechst AG) verwendet. Als Veresterungskatalysator diente ein handelsüblicher Zinn-Katalysator, als Hitzestabililator ein handelsübliches Phosphit.

### Beispiel 1

In einem 10-l-Veresterungsreaktor, versehen mit Temperaturfühler, Rührer, Rückflusskolonne und Destillationsbrücke, werden 1,11 kg (12,25 Mol) Butandiol, 1,41 kg (11,9 Mol) Hexandiol und 0,88 kg (1,45 Mol) Polyethylenglykol mit einem mittleren Molekulargewicht von 600 vorgelegt und bei 140°C unter einer während der ganzen Reaktion aufrechtgehaltenen Stickstoffatmosphäre aufgeschmolzen. Unter Rühren werden dann 2,13 kg (12,8 Mol) Terephthalsäure, 0,80 kg (5,5 Mol) Adipinsäure und 3 g Versterungskatalysator zugegeben. Nach schrittweiser Erhöhung der Innentemperatur auf 235°C wird die Reaktion solange fortgesetzt, bis kein Destillat mehr entsteht. Anschliessend werden 10 g Hitzestabilisator zugegeben. Die Temperatur wird auf 250°C erhöht und schrittweise Vakuum angelegt, bis ein Endvakuum von < 1 mbar erreicht ist. Die Kondensation wird mindestens 2 Stunden fortgesetzt, bis die gewünschte Viskosität erreicht ist.

Der erhaltene Polyetherester hat nach 24-stündiger Trocknung bei 50°C einen Schmelzpunkt von ca. 78°C, einen T_{g} von ca. -30°C und eine Schmelzviskosität, gemessen bei 160°C und 2,16 kg Belastung, von 350 Pa*s.

### Beispiel 2-10

Die Polyester bzw. Polyetherester wurden analog Beispiel 1 hergestellt und sind in der Tabelle 1 zusammengefasst. Dabei liegen die Beispiele 1 - 8 in dem von der Erfindung beanspruchten Rahmen. Beispiel 9 und 10 dienen als Vergleichsbeispiele.

Als Mass für die Kristallisationsgeschwindigkeit dient zum einen das Auftreten eines Erstarrungspunktes beim Abkühlen. Das Vorhandensein eines Kaltkristallisationspunktes weist auf ein schnell kristallisierendes System hin. Fehlt aber dieser Peak oder ist er nur sehr schwach ausgeprägt und es tritt ein deutlicher Schmelzpeak auf, so ist dies ein Zeichen für einen sehr schnell kristallisierendes System.

Der Polyetherester aus Beispiel 9 hat zwar einen tiefen Schmelzpunkt und ist auch flexibel. Aufgrund der langsameren Kristallisationsgeschwindigkeit ist allerdings die Herstellung von Filmen, Webs oder Pulvern nicht möglich.

Der Polyester aus Vergleichsbeispiel 10 ist tiefschmelzend und schnell kristallisierend. Die rein aliphatische Struktur ist allerdings wie oben beschrieben wegen ihrer gegenüber den Polyestern bzw. Polyetherestern aus den Beispielen 1 bis 8 stark erhöhten chemischen und biologischen Abbaubarkeit nicht erwünscht.

**Tabelle 1**

| | 1 | 2 | 3 | 4 | 5 | 6 | 7 | 8 | 9 | 10 |
|---|---|---|---|---|---|---|---|---|---|---|
| Terephthalsäure (Mol-%) | 70 | 80 | 70 | 63 | 60 | 70 | 65 | 62 | 100 | |
| Adipinsäure (Mol-%) | 30 | 20 | 30 | 27 | 30 | 30 | 35 | 38 | | 100 |
| Dimersäure (Mol-%) | | | | 10 | 10 | | | | | |
| Butandiol (Mol-%) | 48 | 48 | 44 | 45 | 45 | 48 | 43 | 48 | 48 | 30 |
| Hexandiol (Mol-%) | 46 | 46 | 50 | 55 | 55 | 52 | 57 | 52 | | |
| Triethylenglykol (Mol-%) | | | | | | | | | 46 | |
| Cyclohexandimethanol (Mol-%) | | | | | | | | | | 70 |
| Polyethylenglykol 600 (Mol-%) | 6 | 6 | 6 | | | | | | 6 | |
| Schmelzpunkt (DSC, °C) | 78 | 89 | 79 | 78 | 68 | 91 | 93 | 78 | 90 | 83 |
| Erstarrungspunkt (DSC, °C) | 21 | 44 | 34 | 35 | - | 28 | 47 | 28 | - | 52 |
| Kaltkrist.-punkt (DSC, °C) | † | † | † | 19 | 15 | † | 13 | † | 46 | † |
| Glastemperatur T_{g} (DSC, °C) | -30 | -28 | -26 | -17 | -25 | -11 | -7 | -20 | -6 | nb |
| Schmelzviskosität (160°C/2,16kg) | 350 | 300 | 250 | 200 | 280 | 320 | 350 | 400 | 200 | 250 |
| Angaben in Mol-%, bezogen auf 100 Mol-% Gesamtsäure und 100 Mol-% Gesamtdiol | | | | | | | | | | |

| | | | | | | | | | | |
|---|---|---|---|---|---|---|---|---|---|---|
| † : nicht vorhanden oder nur sehr schwach ausgeprägt --> sehr schnell kristallisierend | | | | | | | | | | |
| nb: nicht bestimmt | | | | | | | | | | |

### Beispiel 11

Mit dem Copolyetherester aus Beispiel 1 wurden Beschichtungsversuche zur Bestimmung der Originalhaftung und der Wärmestandfestigkeit durchgeführt. Zur Prüfung der Haftfestigkeit auf Textilien wurden Pulver mit einer Korngrösse von 80 bis 200 µm auf einen handelsüblichen Einlagestoff mittels Streubeschichtung und einem Auflagegewicht von 40 g/m² aufgetragen und dieser anschliessend mit einem Pressdruck von 0,4 bar mit einem handelsüblichen Oberstoff verpresst.

Zur Messung der Haftkraft auf Textilien wurden 5 cm breite verklebte Textilstreifen in eine Zugmaschine eingespannt. Die Prüfparameter waren bei allen Messungen konstant:
- Prüfgeschwindigkeit :: 100 mm/min
- Prüfkörperbreite :: 50 mm
- Prüfstrecke :: 80 mm
- Vorkraft :: 0 N
- Prüftemperatur :: 25 °C

Zur Messung der Wärmestandfestigkeit wurden an die verklebten Textilstreifen ein Gewicht von 250 g/5cm angehängt. Die Proben wurden mit den angehängten Gewichten in einem Umluftofen aufgehängt, der mit 1 °C/min aufgeheizt wurde. Die Temperatur, bei der sich die Verklebung löst, wird als Wärmestandfestigkeit bezeichnet. Bei einer Verpresstemperatur von 100 °C ergab sich eine Originalhaftung von 25 N/5cm und eine Wärmestandfestigkeit von 80 °C.

## Patentansprüche

1. Schmelzklebemassen mit hoher Kristallisationsgeschwindigkeit aus einem statistisch aufgebauten Copolyester bzw. Copolyetherester auf Basis von Terephthalsäure, Adipinsäure und einem Gemisch von aliphatischen Diolen, dadurch gekennzeichnet,
dass der molare Anteil an Terephthalsäure, 55 bis 85 Mol-%,
der molare Anteil an Adipinsäure 15 bis 50 Mol-%,
der molare Anteil an Butandiol 40 bis 55 Mol-%,
der Anteil an Hexandiol 40 bis 60 Mol-%,
bezogen auf die Gesamtsäure- und Gesamtdiolmenge von jeweils 100 Mol-%, beträgt,
wobei der Schmelzpunkt der Copolyester- bzw. Copolyesterschmelzklebemassen 65 °C bis 95° C beträgt, mit der Maßgabe, dass Copolyester der Terephthalsäure mit Butandiol - 1,4 - Hexandiol - 1,6 - Gemischen mit molaren Anteilen an Terephthalsäure von 70 Mol-%, Adipinsäure von 30 Mol-%, Butandiol von 50 Mol-% und Hexandiol von 50 Mol-% ausgenommen sind.

2. Copolyester- bzw. Copolyetheresterschmelzklebemassen gemäss Anspruch 1, dadurch gekennzeichnet, dass sie als weitere Säurekomponente einen molaren Anteil an einer längerkettigen aliphatischen Dicarbonsäure mit einer Molmasse von 400 bis 800 g/Mol bis zu 15 Mol-% enthalten.

3. Copolyetherester bzw. Copolyetheresterschmelzklebemassen gemäss Anspruch 1, dadurch gekennzeichnet, dass sie einen molaren Anteil eines längerkettigen aliphatischen Diols mit einer Molmasse von 600 bis 4.000 g/Mol von bis zu 10 Mol-%, bezogen auf die Gesamtdiolmenge von jeweils 100 Mol-%, enthalten.

4. Copolyester- bzw. Copolyetheresterschmelzklebemassen gemäss Anspruch 1, dadurch gekennzeichnet, dass der molare Anteil an Terephthalsäure 60 bis 80 Mol-% beträgt, bezogen auf die Gesamtsäurekonzentration von 100 Mol-%.

5. Copolyester- bzw. Copolyetheresterschmelzklebemassen gemäss den Ansprüchen 1 bis 4, dadurch gekennzeichnet, dass der molare Anteil an Adipinsäure 20 bis 40 Mol-% beträgt, bezogen auf die Gesamtsäurekonzentration von 100 Mol-%.

6. Copolyester- bzw. Copolyetheresterschmelzklebemassen gemäss einem oder mehreren der Ansprüche 1 bis 5, dadurch gekennzeichnet, dass der molare Anteil an Butandiol 40 bis 50 Mol-% beträgt, bezogen auf die Gesamtdiolkonzentration von 100 Mol-%.

7. Copolyester- bzw. Copolyetheresterschmelzklebemassen gemäss einem oder mehreren der Ansprüche 1 bis 6, dadurch gekennzeichnet, dass der molare Anteil an Hexandiol 45 bis 60 Mol-% beträgt, bezogen auf die Gesamtdiolkonzentration von 100 Mol-%.

8. Copolyester- bzw. Copolyetheresterschmelzklebemassen gemäss einem oder mehreren der Ansprüche 1 bis 7, dadurch gekennzeichnet, dass zur Erhöhung der Flexibilität bis höchstens 12 Mol-%, bezogen auf die Gesamtsäuremenge von 100 Mol-%, einer längerkettigen aliphatischen Dicarbonsäure eingesetzt wird.

9. Copolyester- bzw. Copolyetheresterschmelzklebemassen gemäss einem oder mehreren der Ansprüche 1 bis 8, dadurch gekennzeichnet, dass zur Erhöhung der Flexibilität bis höchstens 8 Mol-%, bezogen auf die Gesamtdiolmenge von 100 Mol-%, eines längerkettigen aliphatischen Diols eingesetzt wird.

10. Copolyester- bzw. Copolyetheresterschmelzklebemassen gemäss einem oder mehreren der Ansprüche 1 bis 9, dadurch gekennzeichnet, dass das längerkettige aliphatische Diol ein Polyethylenglykol ist.

11. Copolyester- bzw. Copolyetheresterschmelzklebemassen gemäss einem oder mehreren der Ansprüche 1 bis 10, dadurch gekennzeichnet, dass die Schmelzviskosität, gemessen bei 160°C und 2,16 kg Belastung nach DIN/ISO 1133, nicht über 800 Pa*s, insbesondere nicht über 400 Pa*s liegt.

12. Verwendung der Copolyester- bzw. Copolyetheresterschmelzklebemassen gemäss einem oder mehreren der Ansprüche 1 bis 10 für das Hotmelt-Verfahren oder für die bekannten pulverförmigen Beschichtungsverfahren.

13. Verwendung der Copolyester- bzw. Copolyetheresterschmelzklebemassen gemäss einem oder mehreren der Ansprüche 1 bis 10 mit reduzierter Weichmachermenge zur Herstellung von Klebern und Pasten.
